## Europäisches Patentamt
## European Patent Office
## Office européen des brevets

(19)

(11) Publication number: **0 211 477 B1**

# EUROPEAN PATENT SPECIFICATION

(12)

(45) Date of publication of patent specification: **23.10.91**  (51) Int. Cl.5: **G01D 5/16**

(21) Application number: **86303984.8**

(22) Date of filing: **27.05.86**

(54) **Angular position to linear voltage converter.**

(30) Priority: **03.06.85 US 740602**

(43) Date of publication of application:
**25.02.87 Bulletin 87/09**

(45) Publication of the grant of the patent:
**23.10.91 Bulletin 91/43**

(84) Designated Contracting States:
**DE FR GB IT**

(56) References cited:
**EP-A- 0 071 866**
**FR-A- 1 520 560**

**PATENT ABSTRACTS OF JAPAN, vol. 8, no.
86 (P-269)[1523], 19th April 1984; & JP-A-59
3212 (KATOU SEISAKUSHO K.K.) 09-01-1984**

**PATENT ABSTRACTS OF JAPAN, vol. 6, no.
145, (P-132)[1023], 4th August 1982; & JP-
A-57 67 820 (COPAL K.K.) 24-04-1982**

(73) Proprietor: **HONEYWELL INC.**
**Honeywell Plaza**
**Minneapolis Minnesota 55408(US)**

(72) Inventor: **Feldman Alan Stuart**
**6 East Echo Lane**
**Phoenix Arizona 85020(US)**

(74) Representative: **Singleton, Jeffrey et al**
**Eric Potter & Clarkson St. Mary's Court St.**
**Mary's Gate**
**Nottingham NG1 1LE(GB)**

## Description

The present invention relates to apparatus for information transduction and more specifically to a circuit for converting angular position to a linear voltage.

Prior art solutions for converting angular position information to a linear voltage include closed loop servo systems with angular position information obtained from a synchro resolver. Other prior art systems have employed optical or electro-mechanical encoders to supply angular position information. Prior art systems used to date for converting angular position to linear voltage are generally complex, costly and occupy appreciable volume.

JP-A-59-3212 discloses apparatus for detecting the rotary position of a rotary body, the apparatus employing a potentiometer having two wiper arms displaced by $90°$. Two equal and opposite voltages are applied $180°$ apart to the potentiometer and the output voltages from the wiper arms are compared with reference voltages and the result operated upon to ascertain the rotary position of the rotary body which carries the potentiometer. However, this apparatus does not disclose means for producing a signal which is linearly proportioned to the magnitude of rotation.

The present invention is defined in the appended claims and the objective thereof is to provide a simple, inexpensive and small apparatus where the former synchro and its associated electronics is replaced with a dual wiper potentiometer and a simple linear conditioning circuit.

The present invention provides apparatus for converting angular position to a linear voltage. Use may be made of a low-cost, continuous element, potentiometer having dual wipers positioned $90°$ apart. Equal and opposite polarity voltages are applied to the potentiometer 180 degrees apart. As the wipers of the potentiometer are rotated, two triangular waveshapes displaced 90 degrees from each other are generated. An operational amplifier configured as an inverter/buffer may be used to provide a sawtooth waveform to an operational amplifier configured as a summer where it is added to a constant voltage and a periodic voltage such that the final output is a linear, positive ramp voltage representative of the angular position.

Apparatus for converting angular position to linear voltage in accordance with the present invention will now be described in greater detail, by way of example, with reference to the accompanying drawings, in which:-

Figure 1 is a circuit of the apparatus, and
Figure 2 illustrates the voltage waveforms at designated points in Figure 1.

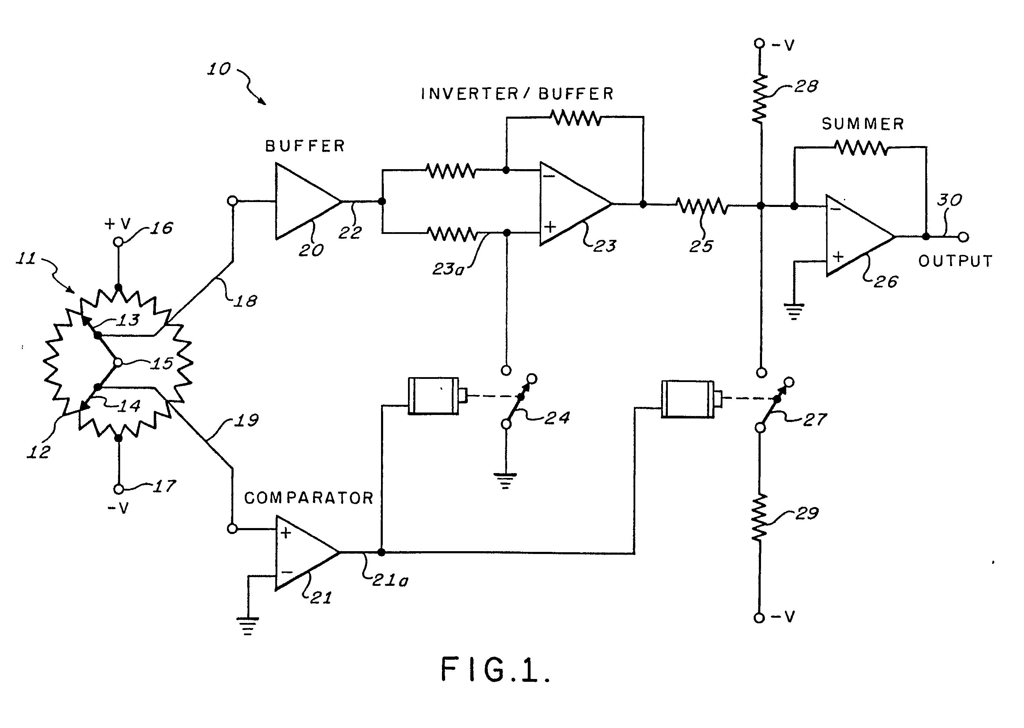

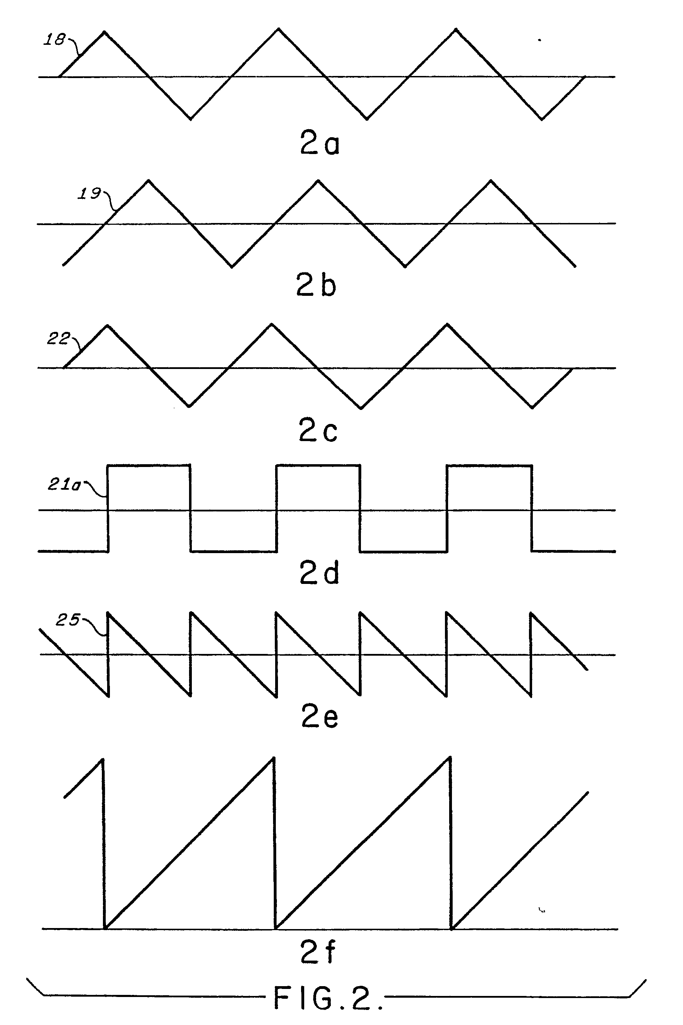

Figure 1 illustrates the functional components of an angular position to linear voltage converter 10. A dual-wiper potentiometer 11 consists generally of a continuous resistive element 12, and two wipers 13 and 14 positioned 90 degrees apart and rotated in the same direction by common shaft 15. D.C. voltages 16 and 17 of equal and opposite polarity are applied to opposite sides of the resistive element 12. As the shaft 15 is rotated, for example clockwise, periodic bi-polar triangular voltage waveforms 18 and 19, 90 degrees out of phase relative to each other, are applied to a buffer 20 and comparator 21, respectively,. The waveforms 18 and 19 are illustrated in Figure 2a and 2b, respectively.

The buffer 20, typically an operational amplifier, prevents loading of the input voltage waveform 18. The output of the buffer 20 is a waveform 22 (depicted in Figure 2c) which is identical to the input waveform 18. The comparator 21 acts to prevent loading of the input waveform 19 and provdes a substantially square wave output waveform 21a, shown in Figure 2d, which is positive when the input waveform 19 is greater than zero, and negative when the input waveform 19 is less than zero.

Component 23 functions either as an inverter or a buffer, depending on the polarity of the waveform 21a at the output of the comparator 21. When the output of comparator 21 is low, (i.e. below zero), a switch 24 is closed thus grounding an input 23a of the inverter/buffer 23, thereby causing it to function as an inverter. When the output of the comparator 21 is high (i.e. positive), the switch 24 is open, allowing the input 23a to float and thus follow the output of the buffer 20 thereby causing component 23 to function as a buffer. Thus, the inverter/buffer 23 converts the triangular waveform 22 into a sawtooth waveform 25 at double the frequency of the triangular waveform 22.

A summer 26 provides a linear, positive-going, ramp waveform 30 (depicted in Figure 2f), by taking the algebraic sum of the sawtooth output waveform 25 of the inverter/buffer 23 plus the constant positive shift provided via a resistor 28 and voltage source -V, equalling one half of the absolute magnitude of the sawtooth output waveform 25, plus the switched positive shift provided via a resistor 29 and voltage source -V equalling the absolute magnitude of the sawtooth output waveform 25 of the inverter/buffer 23 whenever the output of the comparator 21 is low, closing a switch 27. The resistor 29 is brought into circuit when the switch 27 is closed by low (i.e. below zero) output from the comparator 21, and is taken out of circuit when the switch 27 is opened by a high (i.e. positive) output from the comparator.

The linear, positive-going ramp waveform 30 may be coupled to a variety of conventional voltage measuring instruments such as a digital voltmeter.

It will be appreciated that the switches 24 and 27 may be implemented using conventional chopper transistors or field effect transistors such that when the waveform 21a is negative (low) the transistors implementing switches 24 and 27 conduct, thereby closing the switches.

## Claims

1. Apparatus to convert angular position to linear voltage, the apparatus comprising angular position means (11) for generating first and second cyclical voltage waveforms (18;19) which are disposed at a predetermined angular separation from one another, characterised in that the apparatus further comprises waveform converting means (20,21,23) for receiving the first and second cyclical waveforms (18;19) and for providing therefrom a waveform which is an inverted representation of the first cyclical voltage waveform when the second cyclical voltage waveform is negative, and a direct representation of the first cyclical waveform when the second cyclical waveform is positive, and means (26) for summing the output of the waveform converting means and a predetermined d.c. voltage (28) for providing a linear, positive-going ramp waveform representative of the angular position voltage generating means.

2. Apparatus according to claim 1, characterised in that the angular position means comprises a continuous element, dual wiper potentiometer (12,13,14) with the wipers being separated by a predetermined angle.

3. Apparatus according to claim 1 or 2, characterised in that the first and second cyclical voltages (18;19) are triangular waveforms out of phase with each other by said predetermined angle.

4. Apparatus according to any of claims 1 t0 3, characterised in that the predetermined angle is 90 degrees.

5. Apparatus according to any of the preceding claims, characterised in that the waveform converting means comprises a buffer (20) coupled to a first wiper (13) of the dual wiper potentiometer (11) for receiving the first cyclical waveform (18), an inverter/buffer (23) adapted to receive the output of the buffer, a comparator (21) coupled to receive the second cyclical waveform (19), a switch (24) activated by the output of the comparator and operable to connect a first input lead (23a) of the inverter/buffer (23) to ground when activated by the comparator, the inverter/buffer operating as an inverter when the first input lead (23a) is connected to ground by the switch (24), and as a buffer when the first input lead is not connected to ground.

6. Apparatus according to claim 5, characterised in that the switch (24) comprises a transistor such that a negative output of the comparator (21) causes the first input lead to be connected to ground.

7. Apparatus according to claim 5 or 6, characterised in that the waveform converting means comprises a further switch (27) coupled to receive the output of the comparator (21) for providing a predetermined constant voltage to the summer means (26) when periodically actived by the comparator.

8. Apparatus according to any of the preceding claims, characterised in that the summing means comprises an operational amplifier (26) for summing a constant voltage and a periodic voltage and the output of the waveform converting means (20,21) to provide the positive-going ramp waveform.

## Revendications

1. Dispositif pour convertir une position angulaire en une tension linéaire, l'appareil comprenant un moyen de position angulaire (11) pour engendrer une première et une seconde formes d'onde de tension cyclique (18; 19) qui sont disposées selon une séparation angulaire prédéterminée l'une de l'autre, caractérisé en ce que le dispositif comprend de plus des moyens de conversion de forme d'onde (20,21,23) pour recevoir la première et seconde formes d'onde cyclique (18;19) et pour fournir à partir de celles-ci une forme d'onde qui est une représentation inverse de la première forme d'onde de tension cyclique quand la deuxième forme d'onde de tension cyclique est négative, et une représentation directe de la première forme d'onde cyclique quand la deuxième forme d'onde cyclique est positive, et un moyen (26) pour additionner la sortie du moyen de conversion de forme d'onde et une tension de courant continu prédéterminée (28) pour fournir une forme d'onde en rampe linéaire montante positive représentative du moyen générant la tension de position angulaire.

**2.** Dispositif selon la revendication 1, caractérisé en ce que le moyen de position angulaire comprend un élément en continu, un potentiomètre à double curseurs (12,13,14) avec les curseurs étant séparés par un angle prédéterminé.

**3.** Dispositif selon la revendication 1 ou 2, caractérisé en ce que la première et la seconde tensions cycliques (18;19) sont des formes d'onde triangulaires déphasées l'une de l'autre par ledit angle prédéterminé.

**4.** Dispositif selon l'une quelconque des revendications 1 à 3, caractérisé en ce que l'angle prédéterminé vaut 90°.

**5.** Dispositif selon l'une quelconque des revendications précédentes, caractérisé en ce que le moyen de conversion de forme d'onde comprend un tampon (20) relié à un premier curseur (13) du potentiomètre à double curseur (11) pour recevoir la première forme d'onde cyclique (18), un inverseur/tampon (23) adapté pour recevoir la sortie du tampon, un comparateur (21) relié pour recevoir la seconde forme d'onde cyclique (19), un commutateur (24) actionné par la sortie du comparateur et fonctionnant pour relier un premier conducteur d'entrée (23a) de l'inverseur/tampon (23) à la masse quand il est activé par le comparateur, l'inverseur/tampon fonctionnant comme un inverseur quand le premier conducteur d'entrée (23a) est relié à la masse par le commutateur (24), et comme un tampon quand le premier conducteur d'entrée n'est pas relié à la masse.

**6.** Dispositif selon la revendication 5, caractérisé en ce que le commutateur (24) comprend un transistor tel qu'une sortie négative du comparateur (21) fait que le premier conducteur d'entrée est relié à la masse.

**7.** Dispositif selon la revendication 5 ou 6, caractérisé en ce que le moyen de conversion de forme d'onde comprend un commutateur supplémentaire (26) relié pour recevoir la sortie du comparateur (21) pour fournir une tension constante prédéterminée au moyen additionneur (26) quand il est périodiquement activé par le comparateur.

**8.** Dispositif selon l'une quelconque des revendications précédentes, caractérisé en ce que le moyen additionneur comprend un amplificateur opérationnel (26) pour additionner une tension constante et une tension périodique et la sortie du moyen de conversion de forme d'onde (20,21) pour fournir la forme d'onde en forme de rampe montante positive.

**Patentansprüche**

**1.** Wandler zum Umsetzen einer Winkelstellung in eine lineare Spannung mit einer Winkelstellungseinrichtung (11) zum Erzeugen erster und zweiter zyklischer Wellenformen (18, 19), die um einen vorgegebenen Winkelbetrag gegeneinander versetzt sind, **dadurch gekennzeichnet,** daß der Wandler ferner eine Wellenformumsetzereinrichtung (20, 21, 23) aufweist, welche die ersten und zweiten zyklischen Wellenformen (18, 19) empfängt und hieraus eine Wellenform ableitet, die eine invertierte Darstellung der ersten zyklischen Wellenform ist, sofern die zweite zyklische Wellenform negativ ist, und die eine nicht-invertierte Darstellung der ersten zyklischen Wellenform ist, sofern die zweite zyklische Wellenform positiv ist, und daß eine Summiereinrichtung (26) für die Ausgangssignale der Wellenformumsetzeinrichtung und eine vorgegebene Gleichspannung (28) vorgesehen ist, die eine lineare positiv ansteigende Rampenkurve liefert, weiche der Winkelstellung der Spannungserzeugereinrichtung entspricht.

**2.** Wandler nach Anspruch 1, **dadurch gekennzeichnet,** daß die Winkelstellungseinrichtung ein mit einem kontinuierlichen Widerstandselement und zwei Schleifern ausgestattetes Potentiometer (12, 13, 14) aufweist, deren Schleifer um einen vorgegebenen Winkelbetrag gegeneinander versetzt sind.

**3.** Wandler nach Anspruch 1 oder 2, **dadurch gekennzeichnet,** daß die ersten und zweiten zyklischen Spannungen (18; 19) dreieckförmige Kurvenformen sind, welche gegeneinander um den vorgegebenen Winkelbetrag in der Phase versetzt sind.

**4.** Wandler nach einem der Ansprüche 1 bis 3, **dadurch gekennzeichnet,** daß der vorgegebene Winkelbetrag 90° ist.

**5.** Wandler nach einem der vorangehenden Ansprüche, **dadurch gekennzeichnet,** daß die Wellenformumsetzeinrichtung einen an einen ersten Schleifer (13) des Doppelschleiferpotentiometers (11) angeschlossenen, die erste Wellenform empfangenden Pufferspeicher (20), einen das Ausgangssignal des Pufferspeichers aufnehmenden Inverter/Pufferspeicher (23), einen die zweite Wellenform (19) empfangenden Vergleicher (21), sowie

einen durch das Ausgangssignal des Vergleichers aktivierten Schalter (24) aufweist, welcher bei Aktivierung durch den Vergleicher eine erste Eingangsleitung (23a) des Inverter/Pufferspeichers (23) mit Masse verbindet, wobei der Inverter/Pufferspeicher als Inverter arbeitet, wenn die erste Eingangsleitung (23a) vom Schalter (24) mit Masse verbunden ist und als Pufferspeicher arbeitet, wenn die erste Eingangsleitung nicht mit Masse verbunden ist.

6. Wandler nach Anspruch 5, **dadurchgekennzeichnet,** daß der Schalter (23) einen Transistor enthält derart, daß ein negatives Ausgangssignal des Vergleichers (21) die erste Eingangsleitung mit Masse verbindet.

7. Wandler nach Anspruch 5 oder 6, **dadurch gekennzeichnet,** daß die Wellenformumsetzeinrichtung einen weiteren Schalter (27) umfaßt, der das Ausgangssignal des Vergleichers (21) empfängt und eine vorgegebene konstante Spannung an die Summiereinrichtung (26) liefert, sobald er vom Vergieicher periodisch aktiviert wird.

8. Wandler nach einem der vorangehenden Ansprüche, **dadurch gekennzeichnet,** daß die Summiereinrichtung einen Operationsverstärker (26) zum Summieren einer konstanten Spannung und einer periodischen Spannung, sowie des Ausgangssignals der Wellenformumsetzereinrichtung (20, 21) aufweist, um die positiv ansteigende Rampenkurve zu erzeugen.

FIG.1.

2 a

2 b

2 c

2 d

2 e

2 f

FIG.2.